# EUROPEAN PATENT APPLICATION

(11) **EP 4 769 433 A1**
(43) Date of publication of application: **01.07.2026**
(21) Application number: 24307343.4
(22) Date of filing: 31.12.2024
(51) Int. Cl.: G21C 3/344, G21C 3/356

(54) **SPACER GRID AND NUCLEAR FUEL ASSEMBLY**

(71) Applicant: FRAMATOME, 92400 Courbevoie (FR)
(72) Inventor: BLANC, Pascal Didier, 64295 DARMSTADT (DE); FINZEL, Sven, 91301 FORCHHEIM (DE); REHM, Markus, 90427 NÜREMBERG (DE)
(74) Representative: Lavoix

(57) **Abstract**

The spacer grid (14) comprises a plurality of tubular cells (18) for receiving fuel rods (4),
each cell (18) having a polygonal cross section, with at least two support faces (20) and at least two connecting faces (22) alternating around the central axis (C),
each support face (20) having a given at least in part convex shape toward the inside of the cell (18), each support face (18) bearing a protruding element area (24) intended to contact the fuel rod (4);
each connecting face (22) having a given at least in part concave shape toward the inside of the cell (18);
the support face (20) of a given cell (18) lays against one of the connecting faces (22) of a neighbouring cell (18), the convex shape and the concave shape being such that more than 50% of a surface area of said support face (20) outside the protruding element area (24) is in contact with said connecting face (22).

## Description

The present invention relates to a spacer grid of a nuclear fuel assembly.

A nuclear fuel assembly generally comprises fuel rods containing fissile materials and an armature for supporting the fuel rods. The armature for example comprises a lower nozzle and an upper nozzle spaced along an assembly axis, at least one vertical structural element connecting the lower nozzle to the upper nozzle, and spacer grids distributed along the vertical structural element(s). The spacer grids are secured to the vertical structural element(s). The at least one vertical structural element comprises for example several guide thimbles, an instrumentation tube, or a shroud.

The fuel rods are positioned between the lower nozzle and the upper nozzle. The spacer grids are configured for maintaining the fuel rods transversely in position with respect to one another, in a defined lattice.

Each spacer grid may be made of a plurality of tubular spacer grid elements assembled together to form a spacer grid, each spacer grid element being configured for receiving respectively one of the fuel rods.

EP 4016547 A1 discloses a nuclear fuel assembly spacer grid made out of spacer grid elements, each defining a cell for receiving a nuclear fuel rod.

The spacer grid element has a polygonal cross-section comprising alternatively a supporting face comprising an inwardly protruding corrugation and a flat non supporting face. The protruding corrugation is intended to contact the fuel rod.

The spacer grid elements are assembled to form the nuclear fuel assembly spacer grid so that the supporting face of one space grid element is in association with the flat non-supporting face of the adjacent space grid element, forming together a box shaped structure.

A problem encountered with the spacer grid of EP 4016547 A1 is that a part of the cooling fluid bypasses the cell where the rod is located as it flows through the box shaped structure and thus degrades the thermohydraulic performance of the fuel rod cooling.

WO 2021/150133 A1 and WO 2023/13227759 A1 disclose a nuclear fuel assembly spacer grid made out of spacer grid elements, each defining a cell for receiving a nuclear fuel rod.

The spacer grid element has a polygonal cross-section comprising alternatively an inward supporting face and an outward non supporting face. The inward supporting face comprises an inward protrusion intended to contact the fuel rod. The elements are arranged in the spacer grid so that an outward non supporting face of one element is in contact with the outward non supporting faces of two adjacent elements, and an inward supporting face of one element defines a subchannel with the inward supporting faces of two adjacent elements.

One of the problems of this solution is that a part of the cooling fluid bypass the cell where the rod is located as it flows through the subchannels and thus degrades the thermohydraulic performance of the fuel rod cooling.

Another important problem is that all fuel rod supports meet in the same subchannel, providing for more flexible fuel rod support, to the benefit of the insertion forces for example, means to weaken in some form every other subchannel, leading to a weakining of the complete structure.

Another important problem is that when such elements are arranged within a hexagonal spacer grid, it leads to different subchannel shapes between the distal raw of elements and the adjacent flank of the spacer grid. Such variety of flank subchannel shapes also degrades the thermohydraulic and the mechanical performance of the spacer grid and the fuel assembly cooling.

Accordingly, one of the aims of the invention is to provide a spacer grid element with no or minimum flow bypass.

Another aim of the invention is to provide a spacer grid that has spacer grid elements arrangement that provide a same flow behavior and mechanical response at its flanks.

To this end, the invention proposes a spacer grid element of a nuclear fuel assembly, the spacer grid comprising a plurality of cells receiving fuel rods,
each cell being of tubular form having a central axis parallel to the fuel rod received in the cell, the cells being fixed to one another,
each cell having a polygonal cross section perpendicularly to the central axis, with at least two support faces and at least two connecting faces, the support faces and the connecting faces alternating around the central axis,
each support face having a given at least in part convex shape, convex toward the inside of the cell, each support face bearing a protruding element area intended to contact the fuel rod;
each connecting face having a given at least in part concave shape, concave toward the inside of the cell;
the cells being arranged such that the support face of a given cell lays against one of the connecting faces of a neighbouring cell, the convex shape and the concave shape being chosen such that more than 50% of a surface area of said support face outside the protruding element area is in contact with said connecting face.

Since the shape of the connecting face corresponds to the shape of the support face, flow bypass between the connecting face and the support face is minimum.

Furthermore, since more than 50% of a surface area of a support face is in contact with the corresponding connecting face, a double wall is created over most of the surface area of the tube. Said double wall structure enhances the mechanical strength of the spacer grid.

Furthermore, a large surface area is available for welding the neighbouring cells to one another. The welding may be of better quality, and the mechanical strength is improved.

In other embodiments, the spacer grid element comprises one or several following optional features, taken individually or in any technically feasible combination:
- the convex shape of the connecting faces of the cells corresponds to the concave shape of the support faces except for the protruding element area such that 80% to 100% of a surface area of said support face excluding the protruding element area is in contact with said connecting face;
- the convex shape is a V-shape, with wings connected to one another along a ridge substantially parallel to the central axis;
- the wings are flat;
- the concave shape is a V-shape, with wings connected to one another along a ridge substantially parallel to the central axis;
- the wings are flat;
- the convex shape is arcuate, with a generatrix substantially parallel to the central axis;
- the convex shape is a portion of a cylinder;
- the concave shape is arcuate, with a generatrix substantially parallel to the central axis;
- the concave shape is a portion of a cylinder;
- the protruding element area is a shape obtained by deformation of the support face;
- the protruding element area extends in an area of the support face delimited by a line having a substantially closed contour, wherein said line does not touch an outer edge of the support face;
- the support face of said given cell and the corresponding connecting face of said other cell lay against one another along a contact area arranged such that there is no through flow channel between the support face and the corresponding connecting face extending over a full height of the spacer grid;
- the support faces are separated from the connecting faces by corners, the cells being arranged such that each corner of a given cell extend along corners of other cells, with no through flow channel between the corners extending over a full longitudinal height of the spacer grid;
- each cell has a cross-section perpendicularly to the central axis which has an hexagonal or square basis, the support faces being located inward with respect to straight faces of said hexagonal or square basis, the connecting faces being located outward with respect to straight faces of said hexagonal or square basis.

The invention also relates to a nuclear fuel assembly, comprising fuel rods and at least one spacer grid having the features above, the cells of the spacer grid receiving the fuel rods.

The invention and its advantages will be better understood on reading the following description that is given solely by way of non-limiting example and with reference to the appended drawings, in which:
- Figure 1 is a schematic side elevation view of a nuclear fuel assembly;
- Figure 2 is a top view of a spacer grid of the fuel assembly of Figure 1;
- Figure 3 is a top view, at a larger scale, of an area of the spacer grid of Figure 2;
- Figure 4 is a view in perspective of several cells of the spacer grid of the figures 2 and 3;
- Figure 5 is a front view of the support face of a cell of the spacer grid of the figures 2 to 4, with a protruding spring element different from the protruding spring element of the figure 4 ;
- Figure 6 is a top view of a spacer grid of the fuel assembly of Figure 1 according to another embodiment of the invention;
- Figure 7 is a top view, at a larger scale, of an area of the spacer grid of Figure 6;
- Figure 8 is a top view, at a large scale, of an area of another spacer grid with cells having two support faces and two connecting faces; and
- Figure 9 is a top view, at a large scale, of an area of another spacer grid with hexagonal cells having shapes close to the shapes of the cells of EP 4016547 A1.

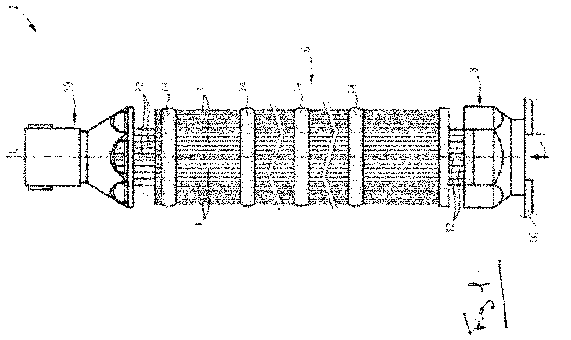

The nuclear fuel assembly 2 of Figure 1 comprises a bundle of nuclear fuel rods 4 and an armature 6 for supporting the fuel rods 4. The fuel assembly 2 is elongated along an assembly axis L.

The armature 6 comprises a lower nozzle 8, an upper nozzle 10, at least one vertical structural element 12 and a plurality of spacer grids 14.

The lower nozzle 8 and the upper nozzle 10 are spaced along the assembly axis L. The structural element(s) 12 extend parallel to the assembly axis L and connect the lower nozzle 8 to the upper nozzle 10.

The at least one structural element 12 comprises several guide thimbles, and/or an instrumentation tube, and/or a shroud.

The spacer grids 14 are distributed along the structural element(s) 12 and are secured to the structural element (s) 12, for instance by welding. Each spacer grid 14 extends transversely to the assembly axis L.

Each fuel rod 4 comprises for example a tubular cladding, pellets of nuclear fuel stacked inside the cladding and end plugs closing the ends of the cladding (not shown).

Each fuel rod 4 extends parallel to the assembly axis L through the spacer grids 14, and is supported transversely and longitudinally relative to assembly axis L by the spacer grids 14. The fuel rods 4 are maintained by the spacer grids 14 transversely in position with respect to one another, in a defined lattice.

In operation, the fuel assembly 2 is for example placed in the core of a nuclear reactor with the lower nozzle 8 resting on a bottom plate 16 of the core and the assembly axis L being substantially vertical. Alternatively, the fuel assembly 2 is hanging from an absorber element.

A coolant flows upwardly, for example from an inlet of the bottom plate 16, through the lower nozzle 8 and between the fuel rods 4, the spacer grids 14 and the upper nozzle 10 as illustrated by arrow F on Figure 1. The coolant flows along the fuel rods 4.

The fuel rods 4 are maintained by the spacer grid 14 at the nodes of the defined lattice.

The guide thimble(s) and/ or instrumentation tube, if any, are integrated in the bundle and received at nodes of the defined lattice.

The nuclear fuel assembly 2 is for example designed for a VVER (acronym for Russian "Vodo-Vodianof Energuetitcheski Reaktor"). The nuclear fuel assemblies 2 for VVER generally have fuel rods 4 arranged in triangular fuel lattice. The spacer grids generally have a hexagonal contour. The fuel rods 4 are maintained by the spacer grid 14 at the nodes of an hexagonal lattice.

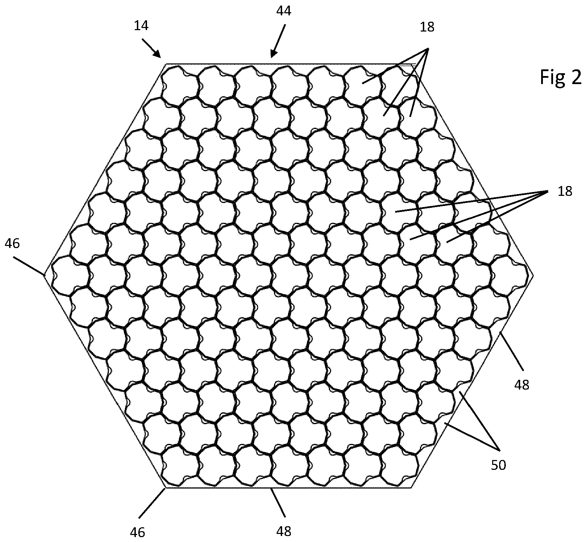

In the fuel assembly 2 represented on Figure 1, the spacer grids 14 are similar to each other and one spacer grid 14 will be further described with reference to Figure 2.

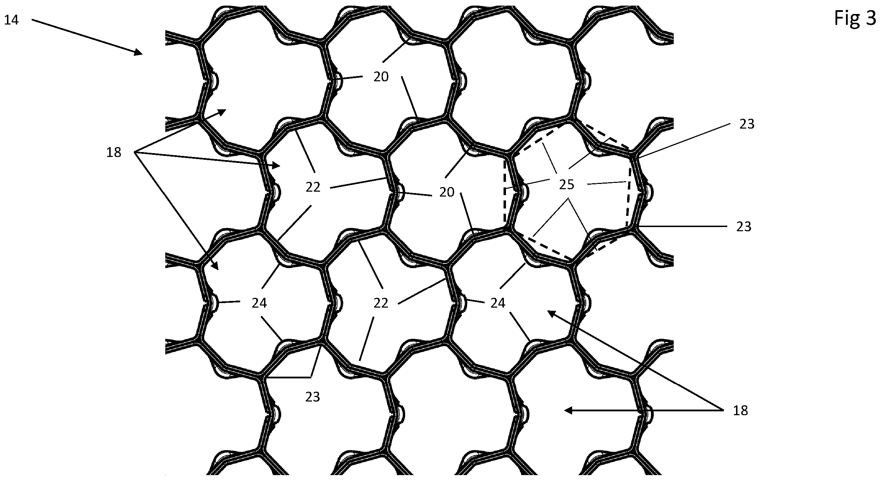

As illustrated on Figures 2 and 3, the spacer grid 14 comprising a plurality of cells 18 for receiving fuel rods 4.

Each cell 18 is of a tubular form having a central axis C parallel to the fuel rod 4 received in the cell. The central axis C is parallel to the assembly axis F.

The cells 18 are fixed to one another, typically by welds.

Each cell 18 has a polygonal cross section perpendicularly to the central axis C, with at least two support faces 20 and at least two connecting faces 22.

The support faces 20 and the connecting faces 22 alternate around the central axis C.

In other words, each support face 20 is located between two connecting faces 22, and each connecting face 22 is located between two support faces 20.

The support faces 20 and the connecting faces 22 are directly connected to one another, by respective sides, along corners 23.

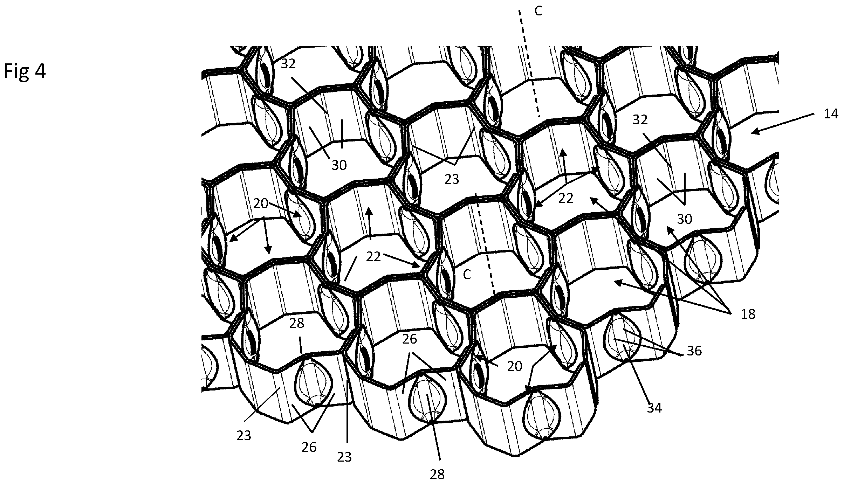

As shown on figures 3 and 4, each support face 20 has a given at least in part convex shape, convex toward the inside of the cell 18.

Each support face 20 is concave toward the outside of the cell 18.

In other words, the support face 20 is convex toward the central axis C of the cell 18.

Each support face 20 bears a protruding element area 24 intended to contact the fuel rod 4. The protruding element can be a simple bumping element done into the support face or a spring element as described hereafter.

The protruding element area 24 protrudes toward the inside of the cell 18, i. e. toward the central axis C, with respect to the support face 20. The fuel rod 4 is maintained in position by the protruding element areas 24 of the support faces 20. Said protruding element areas 24 are arranged around the fuel rod 4, and exert a pressure on the fuel rod 4.

The connecting faces 22 do not bear a protruding element area 24 and do not contact the fuel rod 4.

Each connecting face 22 has a given at least in part concave shape, i.e. concave toward the inside of the cell 18.

In other words, the connecting face 22 is concave toward the central axis C of the cell 18.

Each connecting face 22 is convex toward the outside of the cell 18.

The cells 18 are arranged such that the support face 20 of a given cell 18 lays against one of the connecting faces 22 of a neighboring cell 18, the convex shape and the concave shape being chosen such that more than 50% of a surface area of said support face 20 outside the protruding element area 24 is in contact with said connecting face 22. Outside the protruding element area 24 means here except the area where the protruding element area 24 is formed.

Preferably, more than 60% of a surface area of said support face 20 is in contact with the corresponding connecting face 22, even more preferably more than 80% of a surface area of said support face 20 is in contact with the corresponding connecting face 22. The surface area considered here is outside the spring area 24, i.e. except the area where the protruding element area 24 is formed.

In other words, the convex shape of the connecting faces 22 of the cells corresponds to the concave shape of the support faces 20 except for the spring area such that 80% to 100% of a surface area of said support face 20 excluding the protruding element area 24 is in contact with said connecting face 22.

More precisely, the support face 20 is in contact with the corresponding connecting face 22 substantially across its full surface area, except the area where the protruding element area 24 is formed and except at the radii in the cell corners.

As shown on the figure 2, the cells 18 are arranged at the nodes of a triangular lattice, more precisely a hexagonal lattice in the example depicted.

For the cells 18 inside the lattice, each support face 20 lays against one of the connecting faces 22 of another cell 18, and each connecting face 22 lays against one of the support face 20 of another cell 18.

The concave shape and the convex shape are chosen such that the connecting face 22 is received inside the support face 20 and is directly in contact with the support face 20. The concave shape is substantially complementary of the convex shape.

As indicated above, the support faces 20 and the connecting faces 22 of a given cell 18 are directly connected to one another along corners 23.

Each connecting face extends between two corners 23. An imaginary straight face 25 connect the corners 23 to one another. The shape symmetrical of the concave shape with regard to said straight face 25 is substantially identical to the convex shape.

Each support face 20 extends between two corners 23. An imaginary straight face 25 connect the corners 23 to one another. The shape symmetrical of the convex shape with regard to the straight face 25 is substantially identical to the concave shape.

The convex shapes are identical for all the cells 18. The convex shapes are identical for all the cells 18.

According to the embodiment of the figures 2 to 4, the convex shape is a V-shape, with wings 26 connected to one another along a ridge 28 substantially parallel to the central axis C.

The wings 26 are flat. The ridge 28 is rectilinear.

The ridge 28 divides the support face 20 in two equal parts, the wings 26 having the same size.

The angle formed between the two wings 26 is typically comprised between 110° and 175°, preferably comprised between 135° and 175°, more preferably comprise between 160° and 175°.

In this case, the concave shape is a V-shape as well, with the wings 30 connected to one another along a ridge 32 substantially parallel to the central axis C.

The wings 30 are flat. The ridge 32 is rectilinear.

The ridge 32 divides the connecting face 22 in two equal parts, the wings 30 having the same size.

The angle formed between the two wings 30 is typically comprised between 110° and 175°, preferably comprised between 135° and 175°, more preferably comprise between 160° and 175°.

The protruding element area 24 is located on the ridge 32.

The protruding element area 24 is a shape obtained by deformation of the support face 20.

In other words, the protruding element area 24 is one piece with the connecting face 20, and belongs to the same sheet of material.

Preferably, the protruding element area 24 is a spring or a dimple or a bump or has any other shape adapted to maintain the fuel rod.

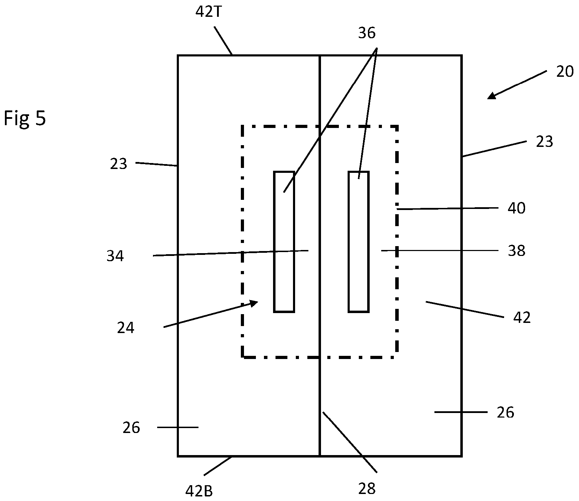

An example of spring is shown on the figures 4 and 5. It comprise a leaf 34, defined between two slots 36.

The slots 36 are parallel to the central axis C.

The leaf 34 is elongated along the central axis C, and defines a bulge toward the inside of the cell 18. In other words, the central part of the leaf 34 is shifted toward the inside of the cell with respect to the ends of the leaf 34.

The protruding element area 24 extends in an area 38 of the support face 20 delimited by a line 40 having a substantially closed contour (figure 5).

Said line 40 does not touch an outer edge of the support face 20 (figure 5), or touch the outer edge of the support face only along an extremely narrow segment, as shown on the figure 4.

As a consequence, the support face 20 of a given cell 18 and the corresponding connecting face 22 of the neighbouring cell 18 lay against one another along a contact area 42 arranged such that there is no through flow channel between the support face 20 and the corresponding connecting face 22 extending over a full height of the spacer grid.

The contact area 42 extends across the full width of the support face 20, from a corner 23 to the opposite corner 23.

The contact area 42 extends across the full width of the connecting face 22, from a corner 23 to the opposite corner 23.

In other words, there is no flow bypass between the support face 20 of a given cell 18 and the corresponding connecting face 22. The cooling fluid is forced to flow inside the cells, in contact with the fuel rod.

The respective top edges 42T of the support face 20 and the corresponding connecting face 22 are in contact with one another, across substantially the full width of the faces.

The respective bottom edges 428 of the support face 20 and the corresponding connecting face 22 are in contact with one another, across substantially the full width of the faces.

The contact area 42 preferably has a substantially closed contour, around the area 38 where the protruding element area 24 is formed.

Preferably, the contact area 42 fully covers the area between the line 40 and the outer edge of the support face 20.

According to another advantageous aspect, the cells 18 are arranged such that each corner 23 of a given cell 18 extends along the corners 23 of other cells 18, with no through flow channel between the corners 23 extending over a full longitudinal height of the spacer grid.

As a consequence, there is no flow bypass between the corners of the cells. The cooling fluid is forced to flow inside the cells, in contact with the fuel rod.

Advantageously, each cell 18 has a cross-section perpendicularly to the central axis C which has an hexagonal basis.

The cell 18 has three support faces 20 and three connecting faces 22.

The support faces 20 are located inward with respect to straight faces 25 of said hexagonal basis, the connecting faces 22 being located outward with respect to straight faces 25 of said hexagonal basis.

The corners 23 of the cell 18 correspond to the angle of the hexagonal basis. The straight faces 25 are the faces connecting the corners 23 to one another.

As shown on the figure 2, the spacer grid 14 has for example an hexagonal shape. It comprises an outer belt 44, having an hexagonal shape.

The cells 18 are arranged at the nodes of an hexagonal network and fitted inside the outer belt 44.

The central axis C of each cell 18 is located at one of the nodes of the hexagonal network.

The cells 18 on the outer layer of the network, along the outer belt 44, do not have a cross section with a hexagonal basis.

The cells 18 inside the network, not located along the outer belt 44, have a cross section with a hexagonal basis.

One cell 18 is located at each angle 46 of the hexagonal belt 44.

Said cell 18 is in contact with three neighbouring cells 18. Said cell 18 is in contact with the three neighbouring cells via two support faces 20 and one connecting face 22, or via one support face 20 and two connecting faces 22. Each support face 20 is as described above, and is in contact with the corresponding connecting face 22 as described above. Each connecting face 22 is as described above, and is in contact with the corresponding support face 20 as described above.

Several cells 18 are located along each straight side 48 of the hexagonal belt 44. All these cells 18 are identical to one another. They are different from the cells located at the corners 46, and different from the cells located inside the hexagonal network.

Each of said cells 18 is in contact with four neighbouring cells 18. Said cell 18 is in contact with the four neighbouring cells via two support faces 20 and two connecting faces 22. Each support face 20 is as described above, and is in contact with the corresponding connecting face 22 as described above. Each connecting face 22 is as described above, and is in contact with the corresponding support face 20 as described above.

Inside the network, each cell 18 is in contact with six neighbouring cells 18. Each cell has six corners 23, each corner 23 extending along two other corners 23, belonging to two neighbouring cells 18.

Through flow channels 50 are formed between the cells 18 of the outer layer and the hexagonal belt 44. No through flow channels are formed:
- between the cells 18 located inside the hexagonal network,
- between the cells 18 located in the outer layer;
- between the cells 18 located in the outer layer and the cells 18 located inside the hexagonal network.

Therefore, most of the coolant flow is forced to circulate inside the cells 18, in contact with the fuel rods 4.

The cells 18 are advantageously manufactured from sheets of metal.

A flat piece of metal is first cut out from the sheet of metal. The flat piece corresponds to the outer shape of the cell, developed in a plane.

The flat piece is then stamped, to create the concave shapes, the convex shapes and the protruding element areas.

Next, the stamped piece is rolled around the central axis to form the cell.

The cells 18 are welded to one another. More precisely, the support face 20 of a given cell 18 and the corresponding connecting face 22 of the neighbouring cell 18 laying against one another are welded together in the contact area 42.

The weld is a weld line, several welding spots or any adapted type of welding.

According to a first variant, the meeting ends of the stamped piece are welded together before the cells are welded to one another. A fully closed cell having the required shape is thus obtained, before the assembling of the grid.

According to a second variant, the meeting ends of the stamped piece are welded together at the same time the cells are welded to one another. The same welding line allows welding the meeting ends together and welding the cell to the neighbouring cell.

According to a third variant, the meeting ends of the stamped piece are not welded together. The meeting ends of the stamped piece are welded to the neighbouring cell.

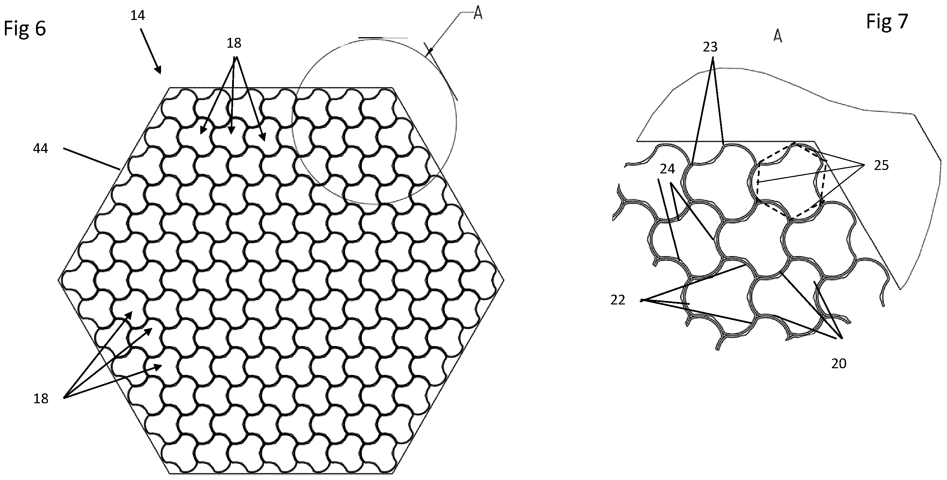

A second embodiment of the spacer grid will now be described, with reference to the figures 6 and 7.

Only the aspects by which the second embodiment differs from the first embodiment will be detailed below.

The elements that are identical or analogous in both embodiments will bear the same numeral references.

In the second embodiment, the convex shape is not a V-shape. The convex shape is arcuate, with a generatrix substantially parallel to the central axis C.

The generatrix is a straight line parallel to the central axis C, the convex shape being obtained by moving the generatrix along a curve extending in a plane perpendicular to the central axis C.

According to a variant, the convex shape is a portion of a cylinder. In that case, the curve is an arc of a circle. The arc of a circle covers an angle between 20° and 130°, preferably between 30° and 110°, more preferably between 30° and 45°.

According to another variant, the curve is a portion of an ellipse, or has any other shape.

In this case, the concave shape is arcuate as well, with a generatrix substantially parallel to the central axis C.

The generatrix is a straight line parallel to the central axis C, the concave shape being obtained by moving the generatrix along a curve extending in a plane perpendicular to the central axis C.

According to a variant, the concave shape is a portion of a cylinder. In that case, the curve is an arc of a circle. The arc of a circle covers an angle between 20° and 130°, preferably between 30° and 110°, more preferably between 30° and 45°.

According to another variant, the curve is a portion of an ellipse, or has any other shape.

The spacer grid is preferably made of a zirconium alloy. In an alternative embodiment, the spacer grid is made of a Ni-based alloy or of any other material with a high mechanical strength such as for instance Ph 13.8 Mo.

The spacer grid is not limited to the examples and variants above. Other examples and variants may be contemplated.

The spacer grid is not necessarily hexagonal. Its section may be rectangular, square, or have any other adapted shape.

Each cell may have two support faces and two connecting faces, or more than three support faces and more than three connecting faces.

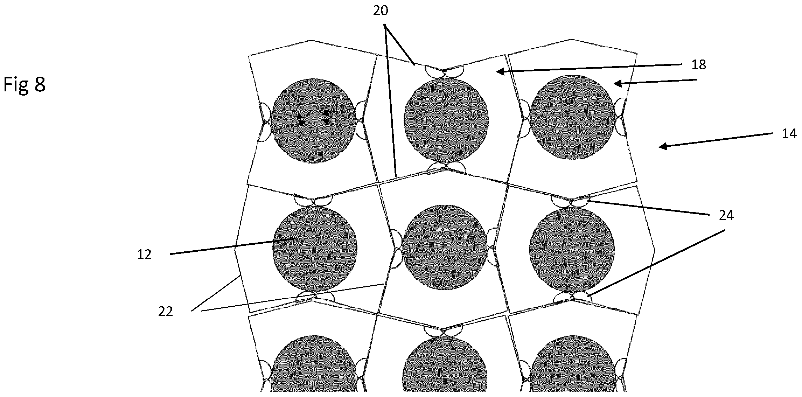

Each cell can be substantially square, as shown on the figure 8, rectangular or have any adapted shape. It means that the section of the cell has a square or rectangular basis.

The nuclear fuel assembly could be designed for a PWR. In this case, the cell has a square section, with two support faces 20 and two connecting faces 22, as shown on the figure 8. The figure 8 shows one structural element 12 inserted in one cell 18, and several fuel rods (not referenced on the figure 8) inserted in other cells 18.

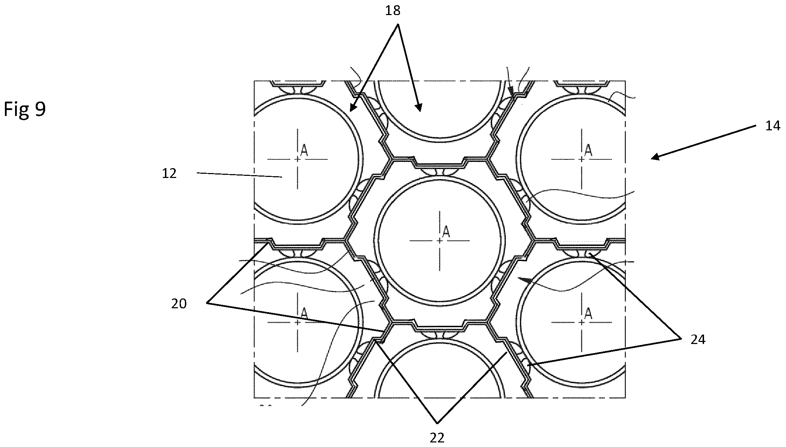

The figure 9 shows another example of spacer grid 14. Each support face 20 has a stepped convex shape, with a step protruding toward the inside of the cell. The step bears the protruding element area 24. Each connecting face face 22 has a stepped concave shape, with a step protruding toward the outside of the cell. The step has the same shape as the step of the corresponding support face, and is inserted inside the step of the corresponding support face. The support face 20 and the corresponding connecting face 22 are in contact with one another over substantially 100% of their respective surface area outised the protruding element area. The figure 9 shows one structural element 12 inserted in one cell 18, and several fuel rods (not referenced on the figure 9) inserted in other cells 18. On the figure 9 the central axis of the cells is labelled A instead of C.

Advantageously, for optimization of the distributed flow of coolant traversing the spacer grid and avoid flow disturbance generated by the thickness of the double walled structure of the adjacent spacer grid cells, at least one support face 20, respectively at least one connecting face 22 of one or more of the cells 18 is provided with a lower flap protruding downwardly and outwardly from the lower edge of the face 20,22 and/or an upper flap protruding upwardly and outwardly from the upper edge of the face 20,22.

Each lower flap is designed to at least partially cover the lower edge of the connecting face 22, respectively the support face 20, along the extension axes (C) of the cells Each upper flap is designed to at least partially cover the upper edge of the connecting face 22, respectively the support face 20, along the extension axes (C) of the cells

## Claims

1. A spacer grid for a nuclear fuel assembly, the spacer grid (14) comprising a plurality of cells (18) for receiving fuel rods (4),
each cell (18) being of tubular form having a central axis (C) parallel to the fuel rod (4) received in the cell (18), the cells (18) being fixed to one another,
each cell (18) having a polygonal cross section perpendicularly to the central axis (C), with at least two support faces (20) and at least two connecting faces (22), the support faces (20) and the connecting faces (22) alternating around the central axis (C),
each support face (20) having a given at least in part convex shape, convex toward the inside of the cell (18), each support face (18) bearing a protruding element area (24) intended to contact the fuel rod (4);
each connecting face (22) having a given at least in part concave shape, concave toward the inside of the cell (18);
the cells (18) being arranged such that the support face (20) of a given cell (18) lays against one of the connecting faces (22) of a neighbouring cell (18), the convex shape and the concave shape being chosen such that more than 50% of a surface area of said support face (20) outside the protruding element area (24) is in contact with said connecting face (22).

2. A spacer grid according to the claim 1, wherein the convex shape of the connecting faces (22) of the cells corresponds to the concave shape of the support faces (20) except for the protruding element area such that 80% to 100% of a surface area of said support face (20) excluding the protruding element area (24) is in contact with said connecting face (22).

3. A spacer grid according to the claim 1 or 2, wherein the convex shape is a V-shape, with wings (26) connected to one another along a ridge (28) substantially parallel to the central axis (C).

4. A spacer grid according to the claim 3, wherein the wings (26) are flat.

5. A spacer grid according to the claim 3 or 4, wherein the concave shape is a V-shape, with wings (30) connected to one another along a ridge (32) substantially parallel to the central axis (C).

6. A spacer grid according to the claim 5, wherein the wings (30) are flat.

7. A spacer grid according to the claim 1 or 2, wherein the convex shape is arcuate, with a generatrix substantially parallel to the central axis (C).

8. A spacer grid according to the claim 7, wherein the convex shape is a portion of a cylinder.

9. A spacer grid according to the claim 7 or 8, wherein the concave shape is arcuate, with a generatrix substantially parallel to the central axis (C).

10. A spacer grid according to the claim 9, wherein the concave shape is a portion of a cylinder.

11. A spacer grid according to anyone of the claims 1 to 10, wherein the protruding element area (24) is a shape obtained by deformation of the support face (20).

12. A spacer grid according to the claim 11, wherein the protruding element area (24) extends in an area (38) of the support face (20) delimited by a line (40) having a substantially closed contour, wherein said line (40) does not touch an outer edge of the support face (20).

13. A spacer grid according to anyone of the claims 1 to 12, wherein the support face (20) of said given cell (18) and the corresponding connecting face (22) of said other cell (18) lay against one another along a contact area (42) arranged such that there is no through flow channel between the support face (20) and the corresponding connecting face (22) extending over a full height of the spacer grid (14).

14. A spacer grid according to anyone of the claims 1 to 13, wherein the support faces (20) are separated from the connecting faces (22) by corners (23), the cells (18) being arranged such that each corner (23) of a given cell extend along corners (23) of other cells (18), with no through flow channel between the corners (23) extending over a full longitudinal height of the spacer grid (14).

15. A spacer grid according to anyone of the claims 1 to 14, wherein each cell (18) has a cross-section perpendicularly to the central axis (C) which has an hexagonal or square basis, the support faces (20) being located inward with respect to straight faces (25) of said hexagonal or square basis, the connecting faces (22) being located outward with respect to straight faces (25) of said hexagonal or square basis.

16. A nuclear fuel assembly (2), comprising fuel rods (4) and at least one spacer grid (14) according to any one of the claims 1 to 15, the cells (18) of the spacer grid (14) receiving the fuel rods (4).
